# EUROPÄISCHE PATENTANMELDUNG

(11) **EP 4 095 027 A1**
(43) Veröffentlichungstag der Anmeldung: **30.11.2022**
(21) Anmeldenummer: 21176572.2
(22) Anmeldetag: 28.05.2021
(51) Int. Cl.: B62K 27/00, B62K 27/06, B62K 27/12, B62K 7/04

(54) **LASTENRAD**

(71) Anmelder: Muff, André Armando, 8006 Zürich (CH)
(72) Erfinder: Muff, André Armando, 8006 Zürich (CH)
(74) Vertreter: Kohlmann, Kai

(57) **Zusammenfassung**

Um ein konstruktiv einfaches, kippstabiles Lastenrad zur Verfügung zu stellen, das sich leicht lenken lässt und zudem bei Nichtgebrauch wenig Platz benötigt, wird ein zweiteiliges Lastenrad umfassend ein einspuriges Zugteil mit zwei Laufrädern und eine Anhängerplattform mit zwei seitlich angebrachten Laufrädern, die sich unabhängig voneinander drehen, vorgeschlagen. Der Vortrieb des Lastenrades erfolgt über das einspurige Zugteil, welches im Wesentlichen einem herkömmlichen Fahrrad oder E-Bike entspricht. Die gute Lenkbarkeit und Fahrdynamik des erfindungsgemäßen Lastenrades wird durch eine Kombination aus einer einzigen einachsigen Verbindung zwischen Zugteil und Anhängerplattform mit selbstlenkenden Radträgern für die Anhängerplattform sowie gefederten Radaufhängungen erreicht.

## Beschreibung

Die Erfindung betrifft ein kippstabiles Lastenrad mit mindestens drei Rädern.

Ein Lastenrad, auch als Transportrad, Lastenfahrrad oder Cargobike bezeichnet, ist ein Fahrrad, das dem Transport von Lasten und Personen dient. Je nach Aufgabe und Einsatzgebiet sind sie mit verschiedenen An- und Aufbauten ausgerüstet. Eine Erweiterung des Einsatzspektrums von Lastenrädern wird durch die Ausstattung mit einem Elektro-Antrieb, insbesondere einem Pedelec -Antrieb erreicht.

Lastenräder mit drei Rädern besitzen entweder vorne oder hinten eine tiefer gelegene Ladefläche, an deren Seite sich links und rechts jeweils ein Laufrad befindet. Befindet sich die Ladefläche zwischen den beiden Hinterrädern, so wird entweder nur eines der Räder angetrieben, oder es muss ein Differential vorgesehen werden. Die Lenkung erfolgt in üblicher Weise über das einzelne Vorderrad in einer Gabel.

Dreiräder mit Ladefläche zwischen den Vorderrädern besitzen zwei gelenkte Vorderräder und ein angetriebenes Hinterrad. Die Last befindet sich im Sichtbereich des Fahrers. Sind die Vorderräder starr mit der Ladefläche verbunden, wird das Rad per schwerfälliger Drehschemellenkung gesteuert, bei der die Last beim Lenken mitschwenkt. Eine Achsschenkellenkung verbessert das Fahrverhalten, indem jedes Vorderrad einzeln angelenkt wird.

Nachteilig bei bekannten kippstabilen Lastenrädern mit drei Rädern ist der hohe konstruktive Aufwand, um das Lastenrad anzutreiben bzw. einfach lenken zu können. Hinzu kommt der erhebliche Platzbedarf den kippstabile Lastenräder mit mindestens drei Rädern auch bei Nichtgebrauch benötigen.

Aus dem Stand der Technik sind bereits Fahrräder mit Anhängern bekannt geworden, bei denen ein Zugteil mit einer Anhängerplattform über mehrere Gelenke miteinander verbunden ist. Die RU 2 041 113 C1, die US 660598 A und die WO 2009/090637 A2 offenbaren mehrachsige Verbindungen zwischen Zugteil und Anhänger, nämlich dreiachsige Verbindungen. Die Fahrräder mit Anhängern sind mit kippstabilen Lastenrädern mit mindestens drei Rädern nicht vergleichbar.

Ausgehend von diesem Stand der Technik liegt der Erfindung die Aufgabe zugrunde, ein konstruktiv einfaches, kippstabiles Lastenrad zur Verfügung zu stellen, das sich leicht lenken lässt und zudem bei Nichtgebrauch wenig Platz benötigt. Zudem soll der Anwendungsbereich des Lastenrades vergrößert werden.

Diese Aufgabe wird durch ein Lastenrad mit den Merkmalen des Anspruchs 1 gelöst. Vorteilhafte Ausgestaltungen der Erfindung ergeben sich aus den Merkmalen der Unteransprüche.

Es handelt sich um ein zweiteiliges Lastenrad umfassend ein einspuriges Zugteil mit zwei Laufrädern und einer Anhängerplattform mit zwei seitlich angebrachten Laufrädern, die sich unabhängig voneinander drehen. Die nicht angetriebenen Laufräder der Anhängerplattform benötigen kein Differential, um einwandfrei Kurven fahren zu können. Der Vortrieb des Lastenrades erfolgt über das einspurige Zugteil, welches im Wesentlichen einem herkömmlichen Fahrrad oder E-Bike entspricht. Das in Fahrtrichtung vordere Laufrad des Zugteils ist lenkbar.

Das Zugteil ist mit der Anhängerplattform ausschließlich über ein einachsiges Drehgelenk und lösbar verbunden, wobei das erste Gelenkteil rahmenfest mit dem Rahmen der Anhängerplattform, das zweite Gelenkteil rahmenfest mit dem Rahmen des Zugteils verbunden ist und die Gelenkachse des Drehgelenks rechtwinklig zur Längsachse des Lastenrades verläuft. Bei Geradeausfahrt des Lastenrades verläuft die Gelenkachse zudem horizontal. Der Begriff rahmenfest bedeutet, dass das jeweilige Gelenkteil fest mit dem Rahmen des Zugteiles bzw. der Anhängerplattform verbunden ist, sodass das Drehgelenk Relativbewegungen zwischen Zugteil und Anhängerplattform lediglich um die einzige Gelenkachse des Drehgelenks zulässt.

Aufgrund des lediglich einen Freiheitsgrades der einen gelenkigen Verbindung in Verbindung mit der auf beiden Seiten des Gelenks rahmenfesten Verbindung wird das einspurige Zugteil durch die derart gekoppelte Anhängerplattform kippsicher stabilisiert, während das Drehgelenk zugleich sicherstellt, dass weitgehend unabhängig von der Topographie des Geländes stets sämtliche Räder des Lastenrades den Bodenkontakt behalten.

Die Lenkbarkeit und Fahrdynamik des Lastenrades wird durch die selbstlenkenden Radträger an der Anhängerplattform erreicht. Jedes der beiden Laufräder ist jeweils an einem Radträger um eine Laufradachse drehbar angeordnet, wobei jeder Radträger um eine Schwenkachse gegenüber dem Rahmen der Anhängerplattform gegen die Kraft mindestens eines Federelementes aus einer Ausgangslage um einen negativen oder positiven Lenkwinkel verschwenkbar ist. Die Schwenkachse jedes der beiden Radträger verläuft im Wesentlichen senkrecht.

Jeder Radträger wird durch die auf die Laufräder von dem Untergrund bei Kurvenfahrt übertragenen Kräfte gegen die Kraft des Federelementes aus einer Ausgangslage nach Art eines Drehschemels verschwenkt. In der Ausgangslage verlaufen die Laufradachsen von Zugteil und Anhängerplattform sämtlich parallel zueinander und rechtwinklig zur Längsachse des Lastenrades. Bei Kurvenfahrt verändert sich der Lenkwinkel der beiden Laufradachsen der Laufräder der Anhängerplattform entsprechend dem gefahrenen Kurvenradius und gegenläufig zum Lenkwinkel des vorderen Laufrades des Zugteils. Der Lenkwinkel ist ein spitzer positiver oder negativer Winkel von wenigen Grad, beispielsweise maximal 15°.

Die Lenkbarkeit und Fahrdynamik des Lastenrades wird durch eine gefederte Radaufhängung weiter unterstützt, indem jeder Radträger eine Stützkonstruktion, eine an der Stützkonstruktion angelenkte Schwinge sowie eine zwischen der Stützkonstruktion und der Schwinge angeordnete Feder-/Dämpfereinheit aufweist, wobei die Schwinge die Laufradachse führt. Die gefederte Schwinge an jedem der beiden Radträger erlaubt bei Kurvenfahrten eine seitliche Neigung des Lastenrades von etwa 10 Grad. Die Neigung erhöht die Kippsicherheit der Anhängerplattform bei Kurvenfahrt.

Eine besonders platzsparende Konstruktion der Anhängerplattform weist einen Rahmen auf, der zumindest teilweise, vorzugsweise vollständig als Platte ausgebildet ist. Die Platte weist beispielsweise eine Größe mit den Abmessungen 80 x 120 cm auf. An der Unterseite der Platte sind die Radträger angeordnet. Die von dem Zugteil gelöste Anhängerplattform kann bei Nichtgebrauch hochkant gelagert werden und benötigt nur eine kleine Stellfläche. Das einspurige Zugteil lässt sich bei Nichtgebrauch der Anhängerplattform wie ein herkömmliches Fahrrad nutzen. Dieser Doppelnutzen ist ein wesentlicher Vorteil des erfindungsgemäßen Lastenrades.

Sofern der Rahmen der Anhängerplattform zumindest teilweise als Platte ausgeführt ist, sind die Radträger für die beiden Laufräder vorzugsweise derart ausgestaltet, dass
- die Stützkonstruktion jedes Radträgers eine um die Schwenksachse verschwenkbare Aufnahmeplatte aufweist, wobei sich die Aufnahmeplatte an der Unterseite der Platte der Anhängerplattform über mindestens ein Lager abstützt,
- die Aufnahmeplatte im radialen Abstand zu der Schwenkachse mindestens eine Tasche zur formschlüssigen Aufnahme des mindestens einen Federelementes aus einem elastisch verformbaren Werkstoff aufweist und
- das Federelement an der Platte der Anhängerplattform derart befestigt ist, dass durch Verschwenken der Aufnahmeplatte um die Schwenkachse das Federelement in der Tasche elastisch verformt wird.

Die Rückstellkräfte des Federelementes bewegen die Aufnahmeplatte des Radträgers nach Beendigung einer Kurvenfahrt in die Ausgangslage zurück. Das mindestens eine Lager zwischen der Aufnahmeplatte und der Platte der Anhängerplattform reduziert beim Verschwenken des Radträgers um die Schwenkachse die Reibung. Bei dem mindestens einen Lager handelt es sich insbesondere um ein konzentrisch zu der Schwenkachse angeordnetes Kugellager.

Im radialen Abstand zu der Schwenkachse sind vorzugsweise mehrere, beispielsweise vier Taschen in gleichem radialen Abstand zur Schwenkachse sowie in gleichmäßigem Winkelabstand zueinander angeordnet. Die Taschen erstrecken sich aus der Ebene der Aufnahmeplatte nach unten. Sie sind vorzugsweise als Hohlzylinder mit rotationssymmetrischem Querschnitt ausgeführt.

Jede rotationssymmetrische Tasche nimmt ein entsprechend geformtes Federelement, beispielsweise einen Block aus einem elastisch verformbaren Werkstoff auf. Der Block wird formschlüssig durch Anlage an der Mantelfläche der Tasche aufgenommen. Durch die rotationssymmetrische Form von Tasche und Block verändert sich der Angriffspunkt der durch das Federelement ausgeübten Kraft beim Verschwenken der Radträger nicht.

Die Stützkonstruktion weist außerdem zwei im parallelen Abstand zueinander angeordnete Seitenwangen auf, die sich von der Aufnahmeplatte nach unten erstrecken. Zwischen den Seitenwangen kann unmittelbar die Laufradachse eines der beiden Laufräder der Anhängerplattform angeordnet sein. Vorzugsweise ist an den beiden Seitenwangen jedoch die Schwinge und die Feder-/Dämpfereinheit angelenkt, wobei die Schwinge die Laufradachse führt.

Eine konstruktiv einfache, selbstlenkende und gefederte Radaufhängung der Laufräder der Anhängerplattform unter Verzicht auf eine separate Feder-/Dämpfereinheit zeichnet sich dadurch aus, dass
- jeder Radträger eine um eine im wesentlichen vertikale Schwenkachse verschwenkbare Stützkonstruktion aufweist,
- an der Stützkonstruktion eine Schwinge um eine im wesentlichen horizontale Schwingenachse drehbar angeordnet ist und die Schwinge die Laufradachse führt,
- an der Schwinge eine Tasche befestigt ist, die zur formschlüssigen Aufnahme eines unteren Abschnitts des Federelementes aus einem elastisch verformbaren Werkstoff eingerichtet ist und
- das Federelement an der Anhängerplattform derart befestigt ist, dass durch Verschwenken der Stützkonstruktion um die Schwenkachse und/oder eine Bewegung der Schwinge um die Schwingenachse das Federelement in der Tasche elastisch verformt wird.

Die Tasche ist an der Oberseite der Schwinge befestigt oder als integraler Bestandteil der als Formteil ausgebildeten Schwinge ausgeführt. Der Querschnitt der Tasche ist vorzugsweise kreiszylindrisch und nimmt einen unteren Abschnitt des entsprechend geformten Federelementes, beispielsweise eines rotationssymmetrischen Blocks aus einem verformbaren Werkstoff auf. Der untere Abschnitt des Blocks liegt an der umlaufenden Mantelfläche der Tasche an. Die Rückstellkräfte des Federelementes bewegen die Stützkonstruktion des Radträgers nach Beendigung einer Kurvenfahrt in die Ausgangslage zurück. Das Federelement übernimmt zugleich die Funktion der Feder-/Dämpfereinheit und erlaubt dadurch bei Kurvenfahrten eine seitliche Neigung des Lastenrades. Bei einer Drehung der Schwinge um die Schwingenachse wird das Federelement gestaucht. Beim Schwenken der Stützkonstruktion um die im wesentlichen vertikale Schwenkachse wird das Federelement in radialer Richtung elastisch verformt. Beim Durchfahren von Kurven überlagern sich beide Verformungen in dem elastischen Element, d. h. es wird zugleich gestaucht und in radialer Richtung elastisch verformt. In dieser einfachen Ausführungsform des Radträgers übernimmt das Federelement folglich eine Doppelfunktion.

Um beim Lenkvorgang eine unnötige Reibung der Stützkonstruktion gegenüber einer Platte des Rahmens der Anhängeplattform zu vermeiden, weist die Stützkonstruktion jedes Radträgers vorzugsweise eine um die Schwenkachse verschwenkbare Aufnahmeplatte auf, wobei sich die Aufnahmeplatte an der Unterseite der Platte der Anhängerplattform über mindestens ein Lager abstützt.

Die Schwinge lässt sich vorteilhaft um eine Schwingenachse an der Stützkonstruktion drehbar lagern, indem die Stützkonstruktion zwei im parallelen Abstand zueinander angeordnete Seitenwangen aufweist, die sich von der Aufnahmeplatte nach unten erstrecken, und an den Seitenwangen die Schwinge angelenkt ist.

Das erste und zweite Gelenkteil des Drehgelenks sind vorzugsweise durch ein separates Verbindungsteil lösbar miteinander verbunden. Hierdurch lässt sich die lösbare Verbindung zwischen Zugteil und Anhängerplattform in das ohnehin erforderliche, einachsige Drehgelenk integrieren.

Wenn das Drehgelenk in einer vorteilhaften Ausgestaltung der Erfindung als ein trennbares Scharniergelenk ausgeführt ist, werden die ineinandergreifenden Buchsen des ersten und zweiten Gelenkteils des Scharniergelenks durch ein insbesondere als Stift ausgeführtes Verbindungsteil lösbar miteinander verbunden. Zur Axialsicherung kann der Stift an einer Seite einen gegenüber dem Buchsendurchmesser größeren Kopf aufweisen, während die gegenüberliegende Seite des Stifts durch ein Sicherungselement, wie z.B. einen Federstecker oder Splint axial gesichert wird. Alternativ kann der Stift an einem Ende ein Gewinde aufweisen, das mit einer Kontermutter oder Konterschraube zusammenwirkt.

Die lösbare Verbindung kann jedoch grundsätzlich auch benachbart zu dem Scharniergelenk angeordnet sein, wenn dadurch keine zusätzlichen Freiheitsgrade der Relativbewegung zwischen dem Zugteil und der Anhängerplattform ermöglicht werden.

Um die Ladung unmittelbar auf der Plattform zu sichern, können zur Ladungssicherung Öffnungen oder Ösen zur Aufnahme von Spanngurten an der Plattform angeordnet sein. Die Ladung kann jedoch auch in einem Behälter aufgenommen werden, der lösbar mit der Plattform über Schraubverbindung verbunden ist. Hierzu können Schrauböffnungen in die Plattform eingebracht werden, die mit entsprechenden Öffnungen in dem Behälter fluchten. Darüber hinaus kommen andere Anbauten bzw. Aufbauten, je nach Einsatzzweck, in Betracht, die auf der Anhängerplattform fixiert werden können.

Das Einsatzspektrum der Lastenräder lässt sich dadurch erweitern, dass das Lastenrad mit einem Elektroantrieb, insbesondere einem Elektroantrieb mit Tretunterstützung ausgerüstet ist. Der Elektroantrieb kann in herkömmlicher Weise, wie bei einem E-Bike (Pedelec), an dem Zugteil angeordnet sein. Insbesondere eignet sich ein mit Elektroantrieb ausgestattetes Lastenrad für verschiedene Dienstleistungen im Bereich der Logistik und der Gastronomie.

Nachfolgend wird die Erfindung anhand der Ausführungsbeispiele näher erläutert. Es zeigen
- **Figur 1**a: ein zweiteiliges Lastenrad im gekoppelten Zustand von Zugteil und Anhängerplattform sowie links im Bild die entkoppelte und platzsparend abgestellte Anhängerplattform,
- **Figur 1b**: das zweiteilige Lastenrad nach Figur 1a beim Überfahren einer Bodenkante sowie links im Bild die entkoppelte, jedoch beladene Anhängerplattform,
- **Figur 1c**: das entkoppelte Zugteil des Lastenrades nach Figur 1a,
- **Figur 2a**: das Lastenrad nach Figur 1 in Draufsicht bei Geradeausfahrt,
- **Figur 2b**: das Lastenrad nach Figur 1 in Draufsicht beim Durchfahren einer Linkskurve,
- **Figur 2c**: das Lastenrad nach Figur 1 in Draufsicht beim Durchfahren einer Rechtskurve,
- **Figur 3**: eine Detaildarstellung einer Vorderansicht eines Radträgers der Anhängerplattform,
- **Figur 4**: eine Draufsicht auf den Radträger nach Figur 3,
- **Figur 5**: eine geschnittene Seitenansicht des Radträgers nach Figur 3 von rechts,
- **Figur 6**: eine Draufsicht auf die Anhängerplattform, ein einachsiges Drehgelenk sowie einen Teil eines Rahmens des Zugteils,
- **Figur 7a**: ein erstes Ausführungsbeispiel eines lösbaren Verbindungsteils des einachsigen Drehgelenkes nach Figur 6,
- **Figur 7b**: ein zweites Ausführungsbeispiel eines lösbaren Verbindungsteils des einachsigen Drehgelenks nach Figur 6
- **Figur 8**: eine Detaildarstellung einer Vorderansicht eines konstruktiv einfacheren Radträgers für die Anhängerplattform sowie

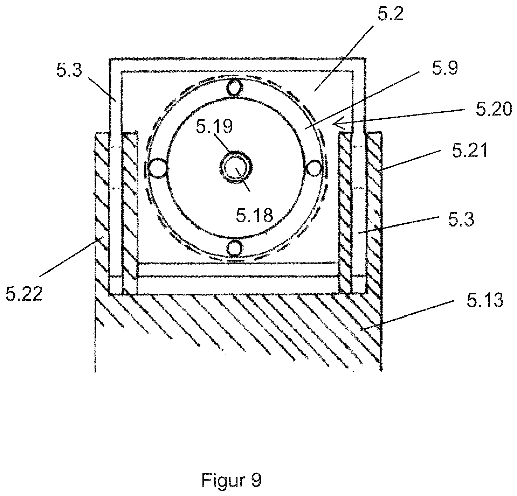

- **Figur 9**: eine teilweise Draufsicht auf den Radträger nach Figur 8.

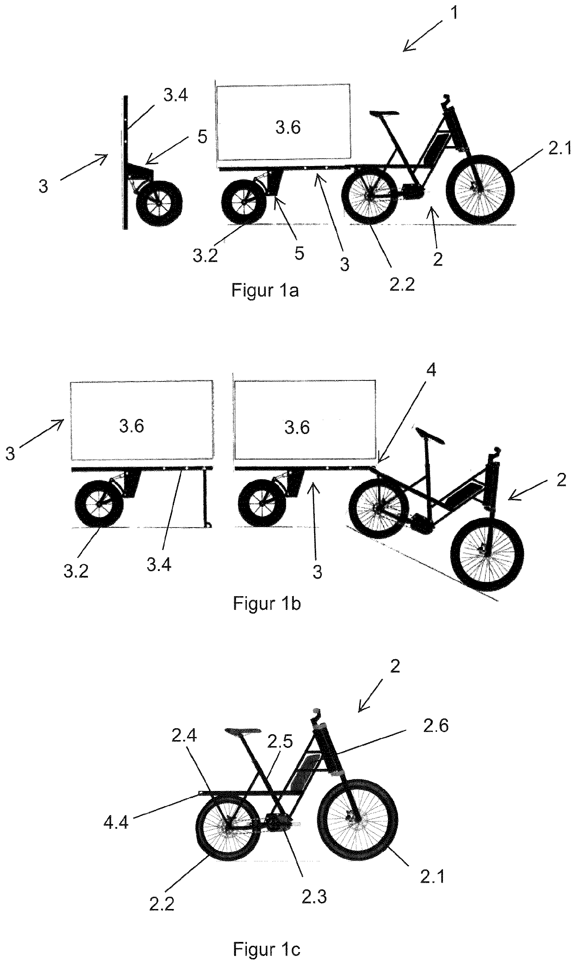

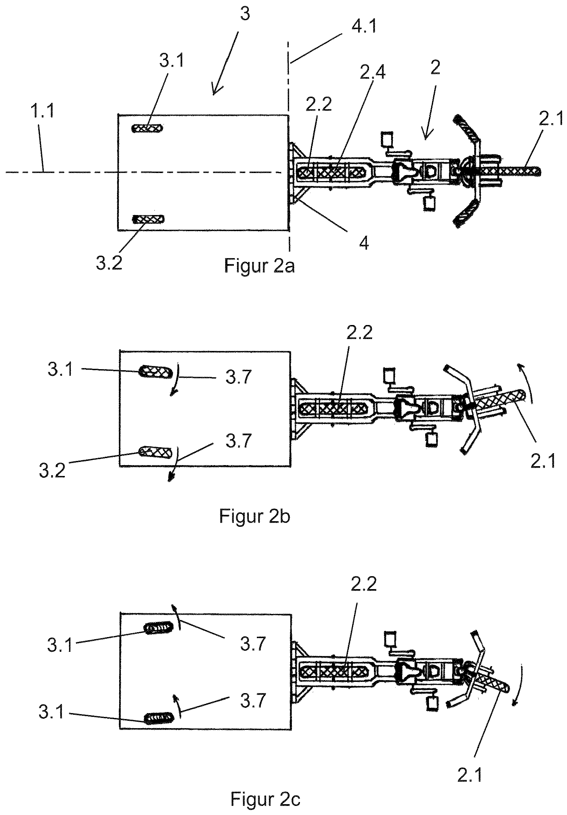

Figur 1a zeigt ein erfindungsgemäßes Lastenrad (1) mit einer Längsachse (1.1) (vgl. Figur 2a) umfassend ein einspuriges Zugteil (2) mit zwei Laufrädern (2.1, 2.2) und eine mit dem Zugteil (2) gekoppelte Anhängerplattform (3).

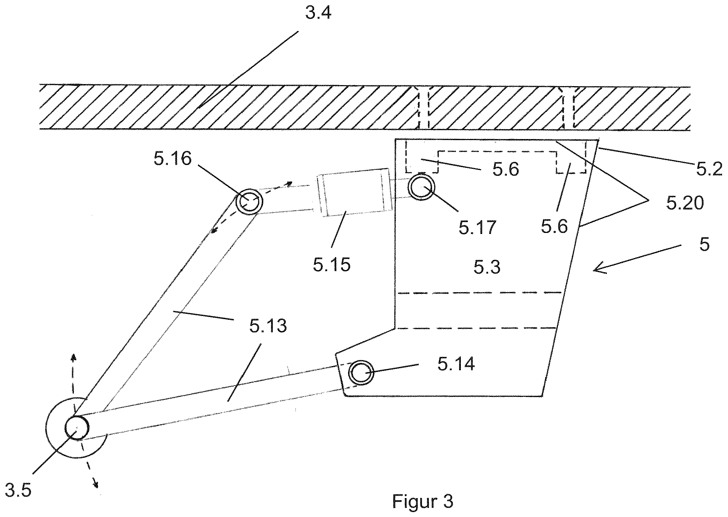

An der Anhängerplattform (3) sind, wie aus Figuren 2a, b, c ersichtlich, unabhängig voneinander drehbare Laufräder (3.1, 3.2) in seitlichem Abstand zu der Längsachse (1.1) angeordnet. Jedes der beiden Laufräder (3.1, 3.2) ist jeweils an einem Radträger (5) um eine Laufradachse (3.5) drehbar angeordnet (vgl. Figur 3). Der konstruktive Aufbau jedes Radträgers (5) wird weiter unten anhand der Figuren 3-5 näher erläutert.

Das Zugteil (2) und die Anhängerplattform (3) sind ausschließlich über ein einziges einachsiges Drehgelenk (4) lösbar miteinander verbunden.

Das Zugteil (2) ist mit einem Elektroantrieb (2.3) mit Tretunterstützung ausgerüstet, um das Ziehen der Anhängerplattform (3) zu erleichtern. Ein Akkumulator (2.6) zur Versorgung des Elektroantriebs (2.3) ist in üblicher Form an dem Rahmen (2.5) des Zugteils (2) angeordnet. Zur Erhöhung der Reichweite können weitere Akkumulatoren, beispielsweise an der Unterseite eines Rahmens (3.4) der Anhängerplattform (3) angebracht werden.

In dem dargestellten Ausführungsbeispiel ist der Rahmen (3.4) der Anhängerplattform (3) vollständig als Platte ausgebildet. Die Ausbildung als Platte bietet den Vorteil, dass auf deren Oberseite auch große Ladungen (3.6) sicher und einfach fixiert werden können. Des Weiteren lassen sich an der Unterseite der Platte problemlos die beiden selbstlenkenden Radträger (5) anordnen (vgl. Figuren 1a, 1b).

Jeder der beiden Radträger (5) umfasst eine Stützkonstruktion (5.2, 5.3), eine an der Stützkonstruktion (5.2, 5.3) angelenkte Schwinge (5.13) sowie eine zwischen der Stützkonstruktion und der Schwinge (5.13) angeordnete Feder-/Dämpfereinheit (5.15).

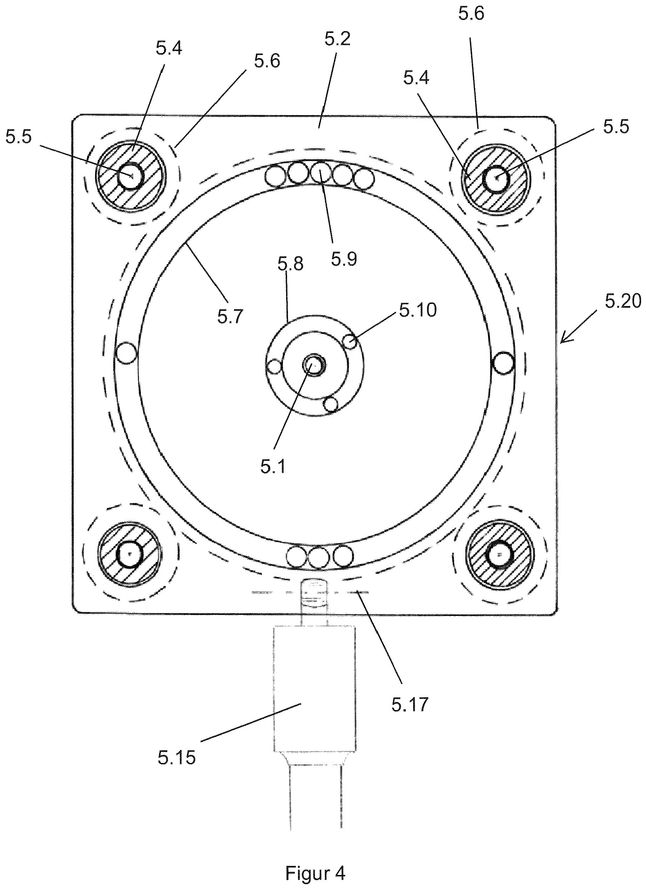

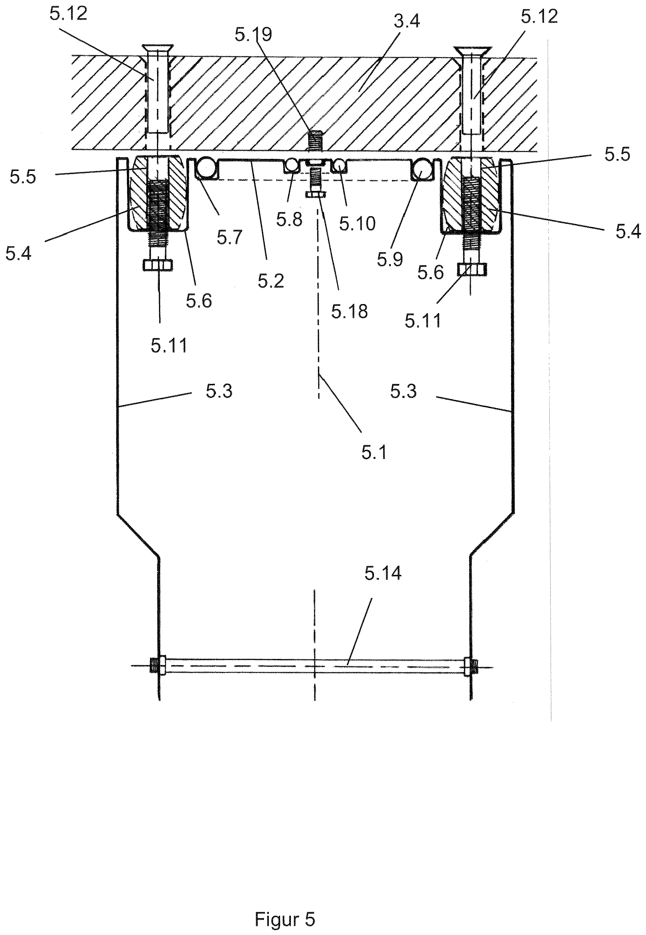

Die Stützkonstruktion (5.2, 5.3) jedes Radträgers (5) weist eine um eine Schwenkachse (5.1) gegenüber dem Rahmen (3.4) verschwenkbare Aufnahmeplatte (5.2) auf, die am besten aus Figur 4 erkennbar ist. Die Stützkonstruktion (5.2,5.3) umfasst weiter zwei im parallelen Abstand zueinander angeordnete Seitenwangen (5.3), die zusammen mit der Aufnahmeplatte (5.2) als ein Blechteil ausgeführt sein können (vgl. Figur 5) . Die Aufnahmeplatte (5.2) stützt sich an der Unterseite des Rahmens (3.4) über zwei konzentrisch zu einer Schwenkachse (5.1) angeordnete Kugellager (5.9, 5.10) ab. Eine große Ringnut (5.7) in der Aufnahmeplatte (5.2) nimmt das im Durchmesser größere Kugellager (5.9) und eine kleine Ringnut (5.8) das im Durchmesser kleinere Kugellager (5.10) auf. Die Schwenkachse (5.1) wird konstruktiv durch eine die Aufnahmeplatte (5.2) durchsetzende Schraube (5.18) gebildet, die in ein Innengewinde (5.19) in dem Rahmen (3.4) eingeschraubt ist.

In übereinstimmendem radialen Abstand zu der Schwenkachse (5.1) sind insgesamt vier hohlzylindrische Taschen (5.6) mit übereinstimmender Geometrie an der Aufnahmeplatte (5.2) angeordnet. Die Taschen können in das Blech der Aufnahmeplatte (5.2) eingebracht werden und erstrecken sich aus der Ebene der Aufnahmeplatte (5.2) nach unten. Der Winkelabstand zwischen sämtlichen Taschen (5.6) beträgt 90 Grad. Jede Tasche (5.6) nimmt formschlüssig ein Federelement (5.4) auf. Das Federelement (5.4) ist ein rotationssymmetrischer, an der Mantelfläche der jeweiligen Tasche (5.6) teilweise anliegender Block aus einem elastisch verformbaren Werkstoff, beispielsweise aus gummielastischem Material. Derartige Federn werden auch als Gummifedern bezeichnet.

Mittels einer sich durch einen Durchgang (5.5) durch das Federelement (5.4) erstreckenden Schraube (5.11) wird jedes Federelement(5.4) in einer in dem Rahmen (3.4) der Anhängerplattform (3) verankerten Gewindebuchse (5.12) befestigt.

Bei einer in Figuren 2b, 2c dargestellten Kurvenfahrt des Lastenrads (1) drehen sich die beiden Aufnahmeplatten (5.2) der Radträger (5) jeweils um ihre Schwenkachsen (5.1) um einen negativen oder positiven Lenkwinkel (3.7). Dabei werden die in den Taschen (5.6) angeordneten Federelemente (5.4) elastisch verformt. Die Rückstellkräfte der elastisch verformbaren Federelemente (5.4) bewegen die Radträger (5) nach Beendigung der Kurvenfahrt in die in Figur 2a dargestellte Ausgangslage zurück. In der Ausgangslage der Radträger (5) sind die Laufräder (3.1, 3.2) der Anhängerplattform (3) für die Geradeausfahrt parallel zur Längsachse (1.1) des Lastenrades (1) ausgerichtet.

Aus Figur 5 ist eine Schwingenachse (5.14) erkennbar, die sich zwischen den Seitenwangen (5.3) der Stützkonstruktion erstreckt. Die in Figur 3 dargestellte Schwinge (5.13) ist als Dreieck-Schwinge mit einem unteren und einem oberen Schwingenarm ausgeführt. Der untere Schwingenarm ist um die Schwingenachse (5.14) drehbar gelagert. Der obere Schwingenarm ist über ein Gelenk (5.16) mit der Feder-/Dämpfereinheit (5.15) verbunden. An der dem Gelenk (5.16) gegenüberliegenden Seite ist die Feder-/Dämpfereinheit (5.15) um eine sich zwischen den Seitenwangen (5.3) erstreckende Achse (5.17) drehbar gelagert.

Die Gelenkachse (4.1) des Drehgelenks (4) verläuft rechtwinklig zu der Längsachse (1.1) des Lastenrades (1), wie dies insbesondere aus Figur 2a erkennbar ist. Die Gelenkachse (4.1) verläuft zudem bei Geradeausfahrt des Lastenrades (1), wie in Figur 2a dargestellt, horizontal. Bei Kurvenfahrten, wie in Figuren 2b, 2c dargestellt, kann das Lastenrad (1) aufgrund der gefederten Konstruktion der Radträger (5) mit einem Schräglagenwinkel bis zu etwa zehn Grad ggü. der Senkrechten in die Kurve gelegt werden, wobei die Gelenkachse (4.1) um einen entsprechenden Winkel aus der Horizontalen schwenkt.

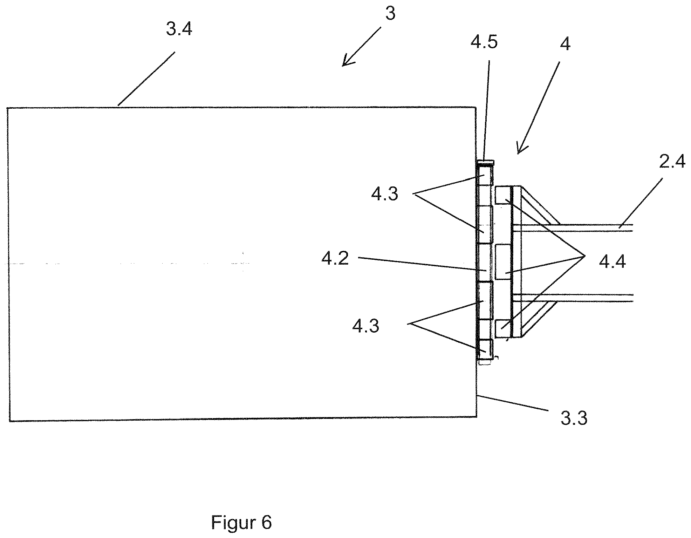

Ein erstes Gelenkteil (4.3) des Drehgelenks (4) ist rahmenfest mit einem Rahmen (3.4) der Anhängerplattform (3) verbunden (vgl. Figur 6). Ein zweites Gelenkteil (4.4) des Drehgelenks (4) ist rahmenfest mit einem Rahmenabschnitt (2.4) des Rahmens (2.5) des Zugteils (2) verbunden (vgl. Figur 6). Der Rahmenabschnitt (2.4) erstreckt sich ausgehend von dem übrigen Rahmen (2.5) in waagerechter Richtung über das hintere Laufrad (2.2) hinaus und bildet den Abschluss des Zugteils (2).

Die lösbare Verbindung zwischen dem Zugteil (2) und der Anhängerplattform (3) ist in dem Ausführungsbeispiel in das als Scharniergelenk ausgebildete Drehgelenk (4) integriert (vgl. Figur 6). Das erste an der Vorderkante (3.3) der Anhängerplattform (3) befestigte Gelenkteil (4.3) wird von in Richtung der Gelenkachse (4.1) angeordneten hohlzylindrischen Buchsen gebildet. Zwischen den Buchsen befinden sich Zwischenräume. Das zweite Gelenkteil (4.4) wird ebenfalls von hohlzylindrischen Buchsen gebildet, die am rückwärtigen Ende des Rahmenabschnitts (2.4) befestigt sind. Die Buchsen des ersten und zweiten Gelenkteils (4.3, 4.4) sind versetzt zueinander angeordnet, sodass die Buchsen des ersten Gelenkteils (4.3) in die Zwischenräume des zweiten Gelenkteils (4.4) und umgekehrt greifen, sodass sämtliche Buchsen des Scharniergelenks miteinander fluchten. Die miteinander fluchtenden Buchsen des Drehgelenks (4.1) werden durch ein als Stift ausgebildetes Verbindungsteil (4.2) lösbar miteinander verbunden.

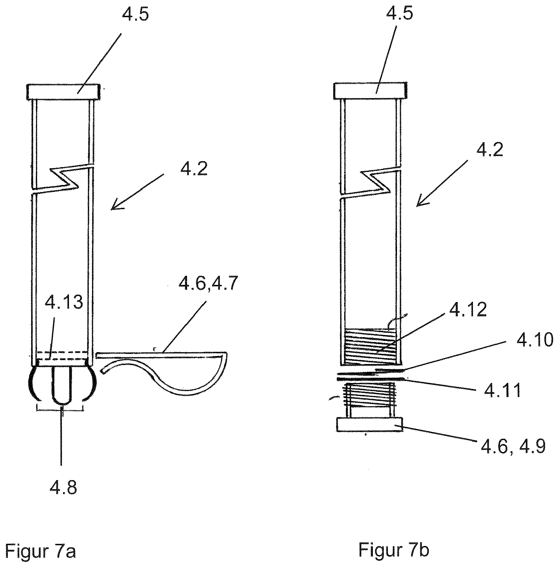

Zur Axialsicherung weist das in Figuren 7a, 7b dargestellte stiftförmige Verbindungsteil (4.2) an einer Seite einen gegenüber dem Innendurchmesser der Buchsen größeren Kopf (4.5) auf. An der gegenüberliegenden Seite wird das stiftförmige Verbindungsteil (4.2) im Ausführungsbeispiel nach Figur 7a durch einen Federstecker (4.7) als Sicherungselement (4.6) axial gesichert, der durch einen Durchgang (4.13) am Ende des Verbindungsteils hindurchgesteckt wird. In dem Ausführungsbeispiel nach Figur 7b erfolgt die Axialsicherung durch eine Sicherungsschraube (4.9), die in ein Innengewinde (4.12) in das hohlzylindrische Verbindungsteil (4.2) einschraubbar ist. Zwischen dem Kopf der Sicherungsschraube (4.9) und dem Verbindungsteil (4.2) ist ein Federring (4.10) und eine Unterlegscheibe (4.11) angeordnet, um ein Lösen der Sicherungsschraube (4.9) zu verhindern.

Das Verbindungsteil (4.2) nach Figur 7a kann zusätzlich an der dem Kopf (4.5) gegenüberliegenden Seite einen mehrteiligen Federstahleinsatz (4.8) aufweisen, der das Einführen des Stiftes in die miteinander fluchtenden Buchsen des ersten und zweiten Gelenkteils (4.3, 4.4) erleichtert.

Das einachsige Drehgelenk (4) zwischen Zugteil (2) und Lastenrad (1) ermöglicht das Überfahren von Geländekanten, wie beispielsweise in Figur 1b dargestellt. Die Lenkbarkeit des Lastenrades wird trotz des nur einachsigen Drehgelenkes (4) durch die beiden selbstlenkenden Radträger (5) erreicht.

Wird ausgehend von der in Figur 2a dargestellten Geradeausfahrt eine Linkskurve gefahren (Figur 2b), werden die Laufräder (3.1, 3.2) der Anhängerplattform (3) gegen die Kraft der Federelemente (5.4) aus der Ausgangslage um einen negativen Lenkwinkel (3.7) verschwenkt, wodurch das Lastenrad trotz der insgesamt vier Laufräder einwandfrei die Linkskurve durchfahren kann. Wird ausgehend von der in Figur 2a dargestellten Geradeausfahrt eine Rechtskurve gefahren (Figur 2c), werden die Laufräder (3.1, 3.2) der Anhängerplattform (3) gegen die Kraft der Federelemente (5.4) aus der Ausgangslage um einen positiven Lenkwinkel (3.7) verschwenkt, wodurch das Lastenrad trotz der insgesamt vier Laufräder einwandfrei die Rechtskurve durchfahren kann.

Durch die entgegengesetzten Lenkwinkel des vorderen Laufrades (2.1) des Zugteils (2) sowie der Laufräder (3.1, 3.2) der Anhängerplattform ist das Durchfahren auch von engen Kurven problemlos möglich. Die Einzelradaufhängung in Verbindung mit der gefederten Schwinge an jedem Radträger (5) ermöglicht beim Durchfahren einer Kurve eine begrenzte Schräglage von Zugteil (2) und Anhängerplattform (3) des gleichwohl kippstabilen Lastenrades (1).

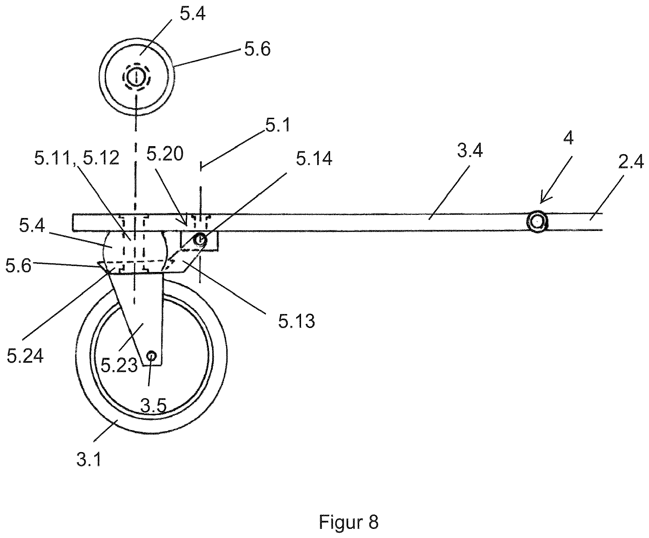

Figur 8 zeigt eine konstruktiv vereinfachte Ausführung einer selbstlenkenden und gefederten Radaufhängung der Laufräder (3.1, 3.2) der Anhängerplattform (3) unter Verzicht auf die Feder-/Dämpfereinheit (5.15).

Der Radträger (5) weist eine um eine im wesentlichen vertikale Schwenkachse (5.1) verschwenkbare Stützkonstruktion (5.20) auf. Die Stützkonstruktion (5.20) verfügt über eine um die Schwenkachse (5.1) verschwenkbare Aufnahmeplatte (5.2). Die Schwenkachse (5.1) wird konstruktiv durch eine die Aufnahmeplatte (5.2) durchsetzende Schraube (5.18) gebildet, die in ein Innengewinde (5.19) in dem Rahmen (3.4) eingeschraubt ist. Um beim Lenkvorgang eine unnötige Reibung der Stützkonstruktion (5.20) gegenüber der Platte des Rahmens (3.4) zu vermeiden, stützt sich die Aufnahmeplatte (5.2) an der Unterseite der Platte des Rahmens (3.4) über ein großes Kugellager (5.9) ab.

Die Schwinge (5.13) ist mit ihren beiden Schwingenarmen (5.21, 5.22) um eine Schwingenachse (5.14) an zwei im parallelen Abstand zueinander angeordneten Seitenwangen (5.3) der Stützkonstruktion (5.20) drehbar gelagert. Die Seitenwangen (5.3) erstrecken sich von der Aufnahmeplatte (5.2) nach unten.

Radhalterungen (5.23) der Schwinge (5.13) führen die Laufradachse (3.5) des Laufrades (3.1, 3.2). An der Schwinge (5.13) ist eine nach oben offene, gefäßförmige Tasche (5.6) befestigt, die formschlüssig einen unteren Abschnitt (5.24) des Federelementes (5.4) aus einem elastisch verformbaren Werkstoff aufnimmt.

Mittels einer sich durch einen Durchgang (5.5) durch das Federelement (5.4) erstreckenden Schraube (5.11) wird das Federelement(5.4) in einer in dem Rahmen (3.4) der Anhängerplattform (3) verankerten Gewindebuchse (5.12) befestigt.

Durch Verschwenken der Stützkonstruktion (5.20) um die Schwenkachse (5.1) und/oder eine Bewegung der Schwinge (5.13) um die Schwingenachse (5.14) beim Durchfahren von Kurven und/oder beim Überfahren von Bodenunebenheiten wird das Federelement (5.4) in der Tasche (5.6) elastisch verformt.

Die gute Lenkbarkeit und Fahrdynamik des erfindungsgemäßen Lastenrades wird erfindungsgemäß durch die Kombination aus einer einzigen einachsigen Verbindung zwischen Zugteil und Anhängerplattform mit den selbstlenkenden Radträgern sowie den gefederten Radaufhängungen erreicht.

**Bezugszeichenliste**

| **Nr.** | **Bezeichnung** | **Nr.** | **Bezeichnung** |
|---|---|---|---|
| 1. | Lastenrad | 4.11 | Unterlegscheibe |
| 1.1 | Längsachse | 4.12 | Innengewinde |
| 2. | Zugteil | 4.13 | Durchgang Verbindungsteil |
| 2.1 | Laufrad | 5. | Radträger |
| 2.2 | Laufrad | 5.1 | Schwenkachse |
| 2.3 | Elektroantrieb | 5.2 | Aufnahmeplatte |
| 2.4 | Rahmenabschnitt | 5.3 | Seitenwangen |
| 2.5 | Rahmen | 5.4 | Federelemente |
| 2.6 | Akkumulator | 5.5 | Durchgang Federelement |
| 3. | Anhängerplattform | 5.6 | Tasche |
| 3.1 | Laufrad | 5.7 | Ringnut groß |
| 3.2 | Laufrad | 5.8 | Ringnut klein |
| 3.3 | Vordere Kante | 5.9 | Kugellager groß |
| 3.4 | Rahmen | 5.10 | Kugellager klein |
| 3.5 | Laufradachse | 5.11 | Schraube |
| 3.6 | Ladung | 5.12 | Innengewinde |
| 3.7 | Lenkwinkel | 5.13 | Schwinge |
| 4 . | Drehgelenk | 5.14 | Schwingenachse |
| 4.1 | Gelenkachse | 5.15 | Feder-/Dämpfereinheit |
| 4.2 | Verbindungsteil | 5.16 | Gelenk |
| 4.3 | Erstes Gelenkteil | 5.17 | Achse Feder-/Dämpfereinheit |
| 4.4 | Zweites Gelenkteil | 5.18 | Schraube |
| 4.5 | Kopf | 5.19 | Innengewinde |
| 4.6 | Sicherungselement | 5.20 | Stützkonstruktion |
| 4.7 | Federstecker | 5.21 | Schwingenarm |
| 4.8 | Federstahleinsatz | 5.22 | Schwingenarm |
| 4.9 | Sicherungsschraube | 5.23 | Radhalterung |
| 4.10 | Federring | 5.24 | Unterer Abschnitt Federelement |

## Patentansprüche

1. Lastenrad (1) mit einer Längsachse (1.1) und mehreren Laufrädern (2.1,2.2,3.1,3.2), **dadurch gekennzeichnet, dass**
- das Lastenrad (1) ein einspuriges Zugteil (2) mit zwei Laufrädern (2.1,2.2) und
- eine Anhängerplattform (3) mit zwei in seitlichem Abstand zu der Längsachse (1.1) nebeneinander angeordneten, unabhängig voneinander drehbaren Laufrädern (3.1,3.2) aufweist, wobei
- jedes der beiden Laufräder (3.1,3.2) jeweils an einem Radträger (5) drehbar angeordnet ist und
- jeder Radträger (5) um eine Schwenkachse (5.1) gegenüber einem Rahmen (3.4) der Anhängerplattform (3) gegen die Kraft mindestens eines Federelementes (5.4) aus einer Ausgangslage um einen negativen oder positiven Lenkwinkel (3.7) verschwenkbar ist,
- das Zugteil (2) und die Anhängerplattform (3) ausschließlich über ein einachsiges Drehgelenk (4) und lösbar miteinander verbunden sind, wobei
- ein erstes Gelenkteil (4.3) des Drehgelenks (4) rahmenfest mit dem Rahmen (3.4) der Anhängerplattform (3) und ein zweites Gelenkteil (4.4) des Drehgelenks (4) rahmenfest mit einem Rahmen (2.5) des Zugteils (2) verbunden ist und
- die eine Gelenkachse (4.1) des Drehgelenks (4) rechtwinklig zu der Längsachse (1.1) des Lastenrades verläuft.

2. Lastenrad (1) nach Anspruch 1, **dadurch gekennzeichnet, dass** der Rahmen (3.4) der Anhängerplattform (3) zumindest teilweise als Platte ausgebildet ist.

3. Lastenrad (1) nach Anspruch 1 oder 2, **dadurch gekennzeichnet, dass** jeder Radträger (5) eine Stützkonstruktion (5.20), eine an der Stützkonstruktion (5.20) angelenkte Schwinge (5.13) sowie eine zwischen der Stützkonstruktion (5.20) und der Schwinge (5.13) angeordnete Feder-/Dämpfereinheit (5.15) aufweist, wobei die Schwinge (5.13) die Laufradachse (3.5) führt.

4. Lastenrad (1) nach Anspruch 2 und 3, **dadurch gekennzeichnet, dass**
- die Stützkonstruktion (5.20) jedes Radträgers (5) eine um die Schwenkachse (5.1) verschwenkbare Aufnahmeplatte (5.2) aufweist, wobei sich die Aufnahmeplatte (5.2) an der Unterseite der Platte der Anhängerplattform (3) über mindestens ein Lager (5.9,5.10) abstützt,
- im radialen Abstand zu der Schwenkachse (5.1) mindestens eine Tasche (5.6) zur formschlüssigen Aufnahme des mindestens einen Federelementes (5.4) aus einem elastisch verformbaren Werkstoff angeordnet ist,
- das Federelement (5.4) an der Platte der Anhängerplattform (3) derart befestigt ist, dass durch Verschwenken der Aufnahmeplatte (5.2) um die Schwenkachse (5.1) das Federelement (5.4) in der Tasche (5.6) elastisch verformt wird.

5. Lastenrad (1) nach Anspruch 4, **dadurch gekennzeichnet, dass** die Stützkonstruktion (5.20) zwei im parallelen Abstand zueinander angeordnete Seitenwangen (5.3) aufweist, die sich von der Aufnahmeplatte (5.2) nach unten erstrecken und an den Seitenwangen (5.3) die Schwinge (5.13) und die Feder-/Dämpfereinheit (5.15) angelenkt sind.

6. Lastenrad (1) nach Anspruch 1, **dadurch gekennzeichnet, dass**
- jeder Radträger (5) eine um eine Schwenkachse (5.1) verschwenkbare Stützkonstruktion (5.20) aufweist,
- an der Stützkonstruktion (5.20) eine Schwinge (5.13) um eine Schwingenachse (5.14) drehbar angeordnet ist und die Schwinge (5.13) die Laufradachse (3.5) führt,
- an der Schwinge (5.13) eine Tasche (5.6) angeordnet ist, die zur formschlüssigen Aufnahme eines unteren Abschnitts (5.24) des Federelementes (5.4) aus einem elastisch verformbaren Werkstoff eingerichtet ist,
- das Federelement (5.4) an der Anhängerplattform (3) derart befestigt ist, dass durch Verschwenken der Stützkonstruktion (5.20) um die Schwenkachse (5.1) und/oder eine Bewegung der Schwinge (5.13) um die Schwingenachse (5.14) das Federelement (5.4) in der Tasche (5.6) elastisch verformt wird.

7. Lastenrad (1) nach Anspruch 2 und 6, **dadurch gekennzeichnet, dass** die Stützkonstruktion (5.20) jedes Radträgers (5) eine um die Schwenkachse (5.1) verschwenkbare Aufnahmeplatte (5.2) aufweist, wobei sich die Aufnahmeplatte (5.2) an der Unterseite einer Platte der Anhängerplattform (3) über mindestens ein Lager (5.9) abstützt.

8. Lastenrad (1) nach Anspruch 7, **dadurch gekennzeichnet, dass** die Stützkonstruktion (5.20) zwei im parallelen Abstand zueinander angeordnete Seitenwangen (5.3) aufweist, die sich von der Aufnahmeplatte (5.2) nach unten erstrecken und an den Seitenwangen (5.3) die Schwinge (5.13) angelenkt ist.

9. Lastenrad nach einem der Ansprüche 1 bis 8, **dadurch gekennzeichnet, dass** das erste und zweite Gelenkteil (4.3,4.4) des Drehgelenks (4) durch ein Verbindungsteil (4.2) lösbar miteinander verbunden sind.

10. Lastenrad (1) nach einem der Ansprüche 1 bis 9, **dadurch gekennzeichnet, dass** das Drehgelenk (4) ein trennbares Scharniergelenk ist und das lösbar in dem Scharniergelenk angeordnete Verbindungsteil (4.2) eine Axialsicherung aufweist.

11. Lastenrad (1) nach einem der Ansprüche 1 bis 10, **dadurch gekennzeichnet, dass** an der Anhängerplattform (3) Befestigungsmittel zur Ladungssicherung angeordnet sind.

12. Lastenrad (1) nach einem der Ansprüche 1 bis 11, **dadurch gekennzeichnet, dass** das Lastenrad (1) mit einem Elektroantrieb (2.3) versehen ist, insbesondere einem Elektroantrieb mit Tretunterstützung.
